Europäisches Patentamt

European Patent Office

Office européen des brevets

(11) Veröffentlichungsnummer: **0 114 974**
**A2**

(12) # EUROPÄISCHE PATENTANMELDUNG

(21) Anmeldenummer: 83111930.0

(22) Anmeldetag: 29.11.83

(51) Int. Cl.³: **C 01 D 5/00**
**C 01 D 1/42, C 01 D 13/00**
**C 01 D 3/08**

(30) Priorität: 28.01.83 DE 3302809

(43) Veröffentlichungstag der Anmeldung:
08.08.84 Patentblatt 84/32

(84) Benannte Vertragsstaaten:
BE CH DE FR IT LI

(71) Anmelder: CHEMISCHE WERKE HÜLS AG
- RSP Patente / PB 15 - Postfach 13 20
D-4370 Marl 1(DE)

(72) Erfinder: Lohrengel, Gregor, Dr.
Aktienstrasse 194
D-4300 Essen 11(DE)

(72) Erfinder: Steinbeisser, Hartmut, Dr.
Gersthofener Strasse 16
D-4370 Marl(DE)

(72) Erfinder: Schade, Wolfgang, Dr.
Parkstrasse 6
D-4358 Haltern-Lippramsdorf(DE)

(54) Verfahren zum Zersetzen natronhaltiger Mehrfachsalze.

(57) Um sowohl eine konzentrierte, möglichst wenig gelöstes Salz enthaltende Natronlauge als auch ein Festsalz mit möglichst geringem Gehalt an NaOH zu erhalten, werden die beim Eindampfen und Abkühlen der Natronlauge aus der NaCl-Elektrolyse anfallenden Mehrfachsalze zersetzt. Dazu wird im Seitenstrom zum Lauge-Hauptstrom der Eindampfanlage der entnommene Salzbrei zunächst eingedickt, und ein Teil der Natronlauge mit großem NaOH-Gehalt wird durch Lauge mit geringerem NaOH-Gehalt ersetzt. Die Mehrfachsalze werden in einem ebenfalls im Seitenstrom liegenden Zersetzer mittels Natronlauge mit weniger als 30 % NaOH-Gehalt zersetzt. Bei diesem Verfahren wird weder bereits auskristallisiertes Salz aufgelöst noch die Salzbelastung im Haupt-Laugestrom erhöht. Der Verlust an NaOH wird gegenüber den bisher üblichen Verfahren merklich herabgesetzt.

0114974
O.Z. 3865

## Verfahren zum Zersetzen NaOH-haltiger Mehrfachsalze

Die Erfindung betrifft ein Verfahren zum Zersetzen NaOH-haltiger Mehrfachsalze, die während des Eindampfens von Natronlauge aus der NaCl-Elektrolyse und des Abkühlens der konzentrierten Lauge entstehen.

Die Erfindung bezweckt, sowohl eine konzentrierte, möglichst wenig gelöstes Salz enthaltende Alkalilauge zu gewinnen, als auch das als Festsalz ausgefallene Natriumchlorid und Natriumsulfat mit möglichst kleinem Gehalt an NaOH und mit möglichst geringen Verlusten an Natronlauge abzutrennen.

Bei der Eindampfung einer gelöstes Natriumchlorid und Natriumsulfat enthaltenden Natronlauge aus einer Diaphragmaelektrolyse scheidet sich in den letzten Stufen der Eindampfung sowie in der nachgeschalteten Laugekühlung ein Feststoffgemisch aus Natriumchlorid, Natriumsulfat sowie Doppel- und/oder Dreifachsalzen ab, das von der Lauge abzentrifugiert und anschließend zur weiteren Verwendung in Natriumchlorid und Natriumsulfat getrennt wird. Das in fester Form mit ausgetragene NaOH wird dabei mit HCl neutralisiert, wodurch neben Verlusten an Natronlauge weitere Kosten durch die Neutralisation entstehen.

Um die geschilderten Laugeverluste zu vermeiden, wird in DE-OS 24 32 808 vorgeschlagen, das in der zweiten und dritten Verdampfungsstufe ausgefallene Salzgemisch in die jeweils vorhergehende Stufe ganz oder teilweise zurückzuführen und das in der letzten Stufe abgeschleuderte NaOH-haltige Salz mit etwas halbkonzentrierter Natronlauge anzuteigen und breiförmig in die zweite Stufe zurückzuführen und so die Gesamtmenge an Doppel-und Dreifachsalz zu zersetzen. Die Zersetzung der Mehrfachsalze in einer (im Seitenstrom liegenden) Hilfsvorrichtung wird als nachteilig hingestellt. Wie bereits in DL-PS 26 13 101 ausgeführt, treten bei der in DE-OS 24 32 808 vorgeschlagenen Verfahrensweise Schwierigkeiten im Gesamtablauf auf.

Nach DE-OS 26 13 101 wird die Zersetzung der Dreifach- bzw. Doppelsalze außerhalb der Verdampfer durchgeführt, wobei das in der letzten Eindampfstufe anfallende NaOH-haltige Salz in einer im Hauptstrom liegenden Zersetzungsstufe in die aus der vorletzten Eindampfstufe kommende Natronlauge gegeben wird. Das in der Laugekühlung anfallende Salz wird in einer zusätzlichen Stufe in der ursprünglichen Rohlauge aufgelöst und in den Hauptstrom zurückgeführt. Das Verfahren erfordert insgesamt zwei zusätzliche Apparate, einen Zersetzer und einen Auflöser. Das Rückführen des in der Laugekühlung bereits mitausgefallenen Natriumsulfats und Natriumchlorids in den Lauge-Hauptstrom hat eine zusätzliche Salzbelastung und vor allem eine erhöhte Natriumsulfatkonzentration in der ersten Verfahrensstufe zur Folge. Dies kann insbesondere bei hoher Auslastung der Eindampfanlage zu einem erhöhten Sulfatgehalt des auskristallisierenden NaCl führen. Die Bedingungen der Zersetzung des in der zweiten Verfahrensstufe entstandenen Doppel- bzw. Dreifachsalzes sind von den Betriebsbedingungen der Gesamtanlage stark abhängig. So werden die Verweilzeiten von Festsalz und Natronlauge durch die Größe des Zersetzers und die Auslastung der Eindampfanlage festgelegt. Der Natronlaugegehalt im Zersetzer hängt von der am Ende der ersten Verfahrensstufe erreichten Konzentration ab.

Im Verfahren nach US-2 863 809 wird das in der letzten Eindampfstufe ausgeschiedene Salz ebenfalls außerhalb des Verdampfers durch Mischen mit aus der vorletzten Eindampfstufe stammender Natronlauge zersetzt. Der Zersetzer liegt in einem nach der vorletzten Eindampfstufe abgezweigten Seitenstrom. Außerdem wird gleichzeitig das aus der Laugekühlung stammende Mehrfachsalz in diesem Zersetzer zersetzt.

Wie weiter bekannt ist, ergibt ein einfacher Rührkessel als Zersetzer im Seitenstrom keine hinreichende Zersetzung der Mehrfachsalze zu NaOH-freien Doppelsalzen, wenn die Betriebsbedingungen im Zersetzer im wesentlichen von den Betriebsbedingungen in der Laugeeindampfung vorgegeben werden, d. h. wenn die Laugekonzentration groß ist und die Verweilzeit des Feststoffs klein ist.

Damit stellt sich die Aufgabe, das bei der Laugeeindampfung und -kühlung entstandene NaOH-haltige Mehrfachsalz zu NaOH-freien Doppelsalzen unabhängig vom Durchsatz im Hauptstrom der Eindampfanlage zu zersetzen und das NaOH-freie Salz von der flüssigen Phase abzutrennen, sowie die feststoff-freie Natronlauge in die Eindampfanlage zurückzuführen, ohne die Salzbelastung der Eindampfanlage zu erhöhen.

Das erfindungsgemäße Verfahren zur Lösung dieser Aufgabe ist durch folgende Merkmale gekennzeichnet:
- Entnehmen der Mehrfachsalze als Salzbrei aus der letzten Eindampf- und/oder der Kühlstufe,
- Eindicken des Salzbreies und Abtrennen eines Teils oder der gesamten Lauge mit großem NaOH-Gehalt und anschließendes Zugeben von Lauge mit geringerem NaOH-Gehalt,
- Einbringen des Salzbreies in einen Zersetzer, der außerhalb des Lauge-Hauptstromes liegt,

0114974
O.Z. 3865

- Zugeben von verdünnter an geeigneter Stelle aus dem Lauge-Hauptstrom abgezweigter Natronlauge in den Zersetzer,

- intensives Mischen der Suspension im Zersetzer,

- Abtrennen des annähernd NaOH-freien festen Doppelsalzes aus NaCl und $Na_2SO_4$ sowie des gegebenenfalls vorhandenen Überschusses an festem NaCl oder $Na_2SO_4$ aus der Suspension,

- Rückführen der an verschiedenen Stellen abgetrennten feststoff-freien Natronlauge, die noch gelöste Salze enthält, in den Lauge-Hauptstrom.

Als Zersetzer mit intensiver Durchmischung der Suspension kann ein Zersetzer mit Rohrcharakteristik, ein Rührkessel, ein Kessel mit Zwangsumlauf der Suspension mittels Umwälzpumpe oder eine Kaskade eingesetzt werden. Die Temperatur im Zersetzer liegt zwischen 50 $^{\circ}$C und 100 $^{\circ}$C. Die Laugekonzentration liegt unterhalb 30 % NaOH in der Flüssigphase. Die Verweilzeit des Feststoffes in Rohrzersetzer beträgt mindestens 30 min, im Rührkesselzersetzer mindestens 60 min.

Der Salzbrei kann vor der Zersetzung der Mehrfachsalze mittels Hydrozyklon, **Eindicker**, **Zentrifuge oder Salz**sack eingedickt werden; die Verweilzeit des Feststoffs im Eindicker beträgt 15 min oder weniger. Es kann zweckmäßig sein, den Salzbrei in mehreren Stufen oder nur einen Teil des Salzbreis einzudicken.

Aus der den Zersetzer verlassenden Suspension wird das Festsalz mittels einer Zentrifuge abgetrennt, der gegebenenfalls ein Absetzbehälter vorgeschaltet ist.

Unter Salzbrei wird eine Suspension mit einem Feststoffgehalt von 20 bis 60 Gew.-% verstanden; der Feststoff besteht aus auskristallisierten Salzen (NaCl und $Na_2SO_4$) und/oder Mehrfachsalzen aus NaCl, $Na_2SO_4$ und NaOH. Die

flüssige Phase der Suspension besteht im wesentlichen aus einer wäßrigen NaOH-Lösung unterschiedlicher Konzentration; sie ist stets (in Abhängigkeit von der NaOH-Konzentration und der Temperatur) mit NaCl und mit $Na_2SO_4$ gesättigt. Mit steigender NaOH-Konzentration sinkt der Sättigungsgehalt für NaCl und $Na_2SO_4$ stark ab.

Die in den verschiedenen Stufen des Verfahrens abgetrennte Natronlauge wird an jeweils die Stelle des Lauge-Hauptstromes zurückgeführt, deren NaOH-Konzentration am besten zu der NaOH-Konzentration der Lauge (unter Beachtung der Temperatur) paßt.

Das erfindungsgemäße Verfahren hat folgende Vorteile:

- Die Mehrfachsalze werden im Seitenstrom zersetzt; deshalb können die Bedingungen im Zersetzer unabhängig von den momentanen Betriebsbedingungen der Laugeeindampfung eingestellt werden.

- Die in unterschiedlicher Menge anfallenden Mehrfachsalze werden stets unter optimalen Bedingungen zersetzt, wobei innerhalb eines gewissen Konzentrationsbereiches die für die Zersetzung optimale Konzentration der Natronlauge und die optimale Verweilzeit des Feststoffes im Zersetzer eingestellt werden kann.

- Der bisher unvermeidbare große Verlust an Natronlauge wird durch die optimale Zersetzung der Mehrfachsalze merklich herabgesetzt.

- Das Natriumsulfat wird aus der Laugeeindampfung weitgehend ausgeschleust; ein großer Teil des aus der Laugeeindampfung entnommenen NaCl ist annähernd frei von $Na_2SO_4$.

- Es wird nur ein Zersetzer benötigt.

- Die Laugekonzentration im Seitenstrom wird herabgesetzt, ohne bereits auskristallisiertes Salz wieder aufzulösen und ohne die Salzbelastung im Lauge-Hauptstrom zu erhöhen.

0114974

O.Z. 3665

In den folgenden Figuren sind Einzelheiten des Verfahrens beispielhaft dargestellt; das erfindungsgemäße Verfahren ist jedoch nicht auf die Beispiele beschränkt.

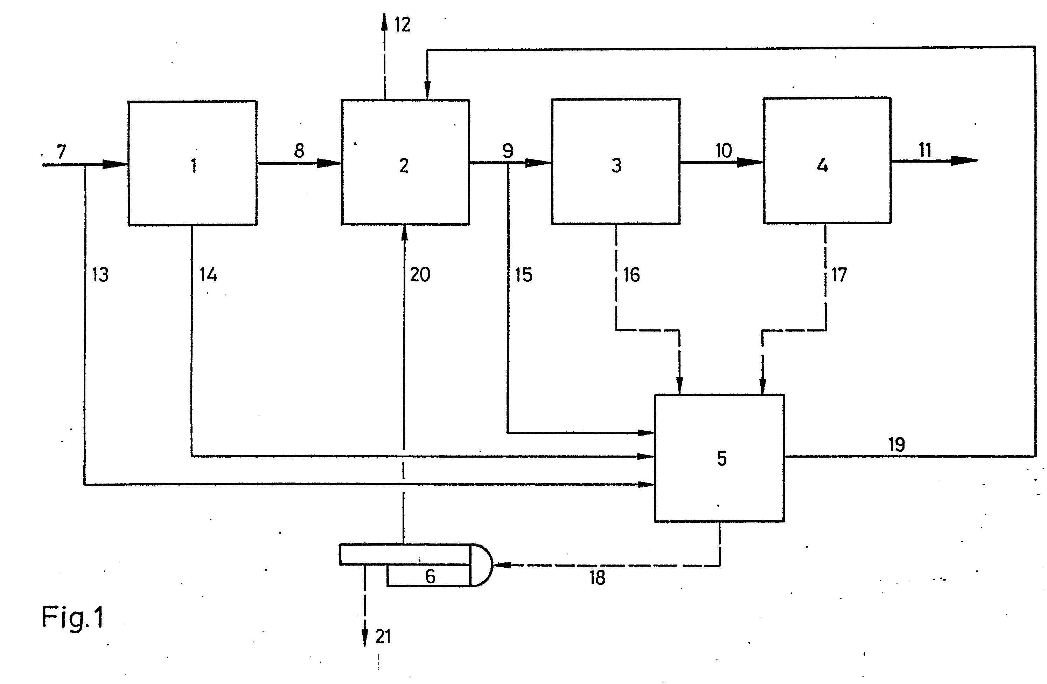

Figur 1 zeigt das erfindungsgemäße Verfahren in seiner Beziehung zur Laugeeindampfung. Im Lauge-Hauptstrom (dargestellt durch die Bezugszeichen (7), (8), (9), (10) und (11) liegen die vier Stufen (1), (2), (3) und (4). Die für das erfindungsgemäße Verfahren notwendigen Vorrichtungen (5) und die Abscheidevorrichtung (6) liegen im Seitenstrom.

In diesen Vorrichtungen laufen die folgenden Vorgänge ab. In der Stufe (1) wird die über Leitung (7) zugeführte 10- bis 11-%ige Natronlauge aus den Elektrolysezellen eingedampft. Aus der Leitung (7) wird über Leitung (13) verdünnte Natronlauge entnommen, über Leitung (14) wird aus der Eindampfstufe (1) etwa 14-%ige, geklärte, feststofffreie Natronlauge abgezweigt. Die feststoff-haltige Natronlauge läuft über Leitung (8) weiter in die Eindampfstufe (2). Hier steigt die Konzentration auf etwa 25 % NaOH in der Flüssigphase; reines NaCl scheidet sich ab, das über Leitung (12) entnommen wird. Die feststoff-freie Lauge läuft über Leitung (9) weiter in die Eindampfstufe (3), in der die Konzentration auf etwa 43 % NaOH in der Flüssigphase steigt. Das ausgefallene Mehrfachsalz wird als Salzbrei über Leitung (16) abgezogen, die feststofffreie Lauge wird über Leitung (10) in die Stufe (4) geleitet, in der die Konzentration durch Entspannungsverdampfung und Abkühlung auf etwa 50 % NaOH in der Flüssigphase steigt. Weiteres Mehrfachsalz wird als Salzbrei über Leitung (17) abgezogen. Über Leitung (11) verläßt die feststoff-freie konzentrierte Natronlauge den Prozeß.

Die erfindungsgemäße Stufe (5) wird über einige oder alle Leitungen (13), (14) und (15) mit Natronlauge unterschiedlicher Konzentration und über die Leitungen (16) und (17) mit Salzbrei versorgt. Die in der Stufe (5) abgetrennte feststoff-freie Lauge wird über Leitung (19) beispielsweise in die Eindampfstufe (2) zurückgeführt. Das in der
Stufe (5) zersetzte Mehrfachsalz wird als Salzbrei (in
Natronlauge suspendierter NaOH-freier Feststoff) über die
Leitung (18) in die Zentrifuge (6) geleitet. Die dort
abgetrennte feststoff-freie Natronlauge wird über Leitung (20) in die Eindampfstufe (2) zurückgeführt, der abgeschiedene (NaOH-freie) Feststoff verläßt über Leitung (21)
den Prozeß.

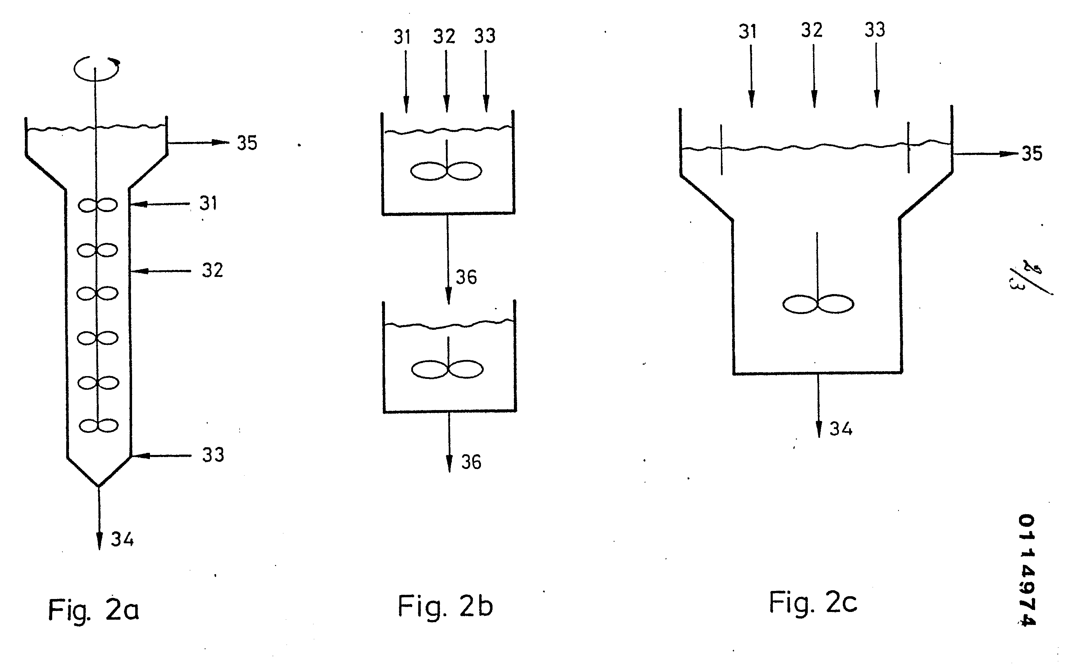

In Figur 2 sind einige Zersetzertypen schematisch dargestellt, und zwar in Figur 2a ein Zersetzer mit Rohrcharakteristik (Feststoff und Flüssigkeit im Gegenstrom),
in Figur 2b eine zweistufige Rührkesselkaskade (mit angenäherter Rohrcharakteristik; Feststoff und Flüssigkeit im
Gleichstrom) und in Figur 2c ein Rührkessel (mit Rührkesselcharakteristik und erhöhter Verweilzeit des Feststoffes). An den Stellen (31) wird der Salzbrei aus der
letzten Eindampfstufe eingegeben, an der Stelle (32) der
Salzbrei aus der Laugekühlung. Über Leitung (33) wird verdünnte Natronlauge eingespeist. Über Leitung (35) läuft
feststoff-freie Natronlauge ab, jeweils am Boden der Behälter wird an der Stelle (34) oder (36) der NaOH-freie
Salzbrei abgezogen. Dieser enthält 30 bis 40 % Feststoff
bei den Zersetzern nach Figur 2a und 2c und 15 bis 20 %
Feststoff bei dem Zersetzer nach Figur 2b.

Tabelle 1 enthält die Ergebnisse der Zersetzungsuntersuchungen von Mehrfachsalzen mit den drei in Figur 2 dargestellten Zersetzertypen. Der NaOH-Gehalt des Feststoffs
läßt sich je nach der gewählten Konzentration der Natronlauge und der Verweilzeit des Feststoffes im Zersetzer
deutlich herabsetzen. Hinsichtlich des Zersetzungsgrades
ist der Zersetzer mit Rohrcharakteristik am wirksamsten.
Der Zersetzungsgrad ist das Verhältnis der Abnahme des
NaOH-Gehaltes im Feststoff durch die Zersetzung und dem
NaOH-Gehalt im Feststoff vor der Zersetzung.

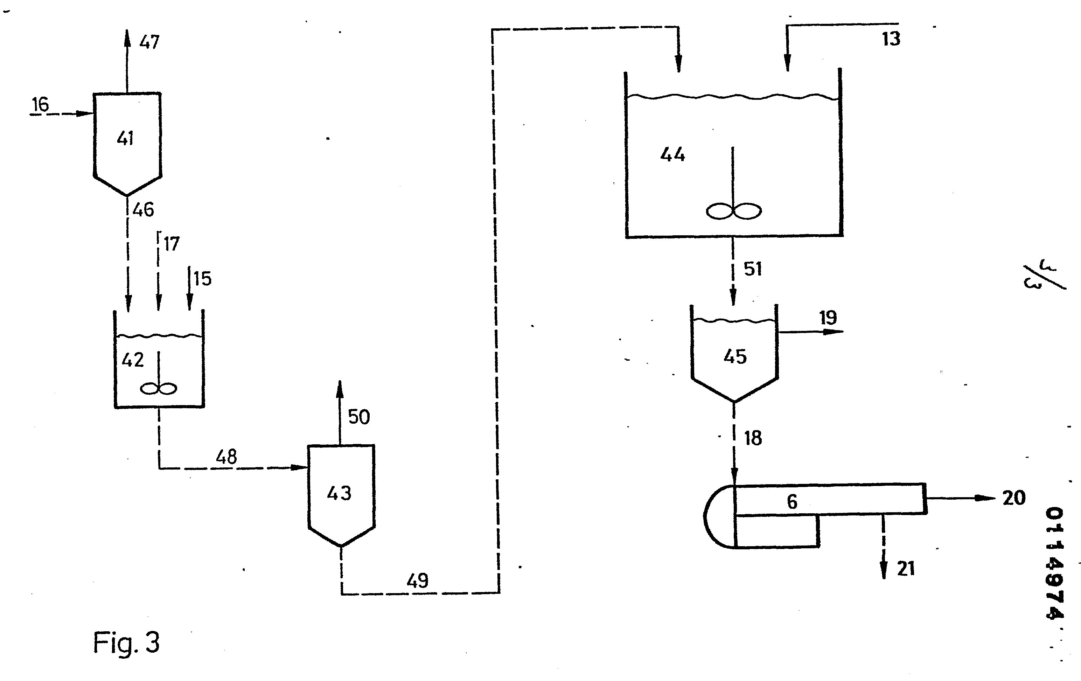

In Figur 3 ist eine weitere zur Durchführung des erfindungsgemäßen Verfahrens geeignete Vorrichtung dargestellt. Diese besteht aus der ersten Stufe mit Hydrozyklon (41), Rührkessel (42) und Hydrozyklon (43), sowie der zweiten Stufe mit Rührkessel (44), Absetzbehälter (45) und Zentrifuge (6). Mittels dieser Vorrichtung wird das erfindungsgemäße Verfahren beispielsweise wie folgt durchgeführt:

In der ersten Stufe wird die NaOH-Konzentration in der Flüssigphase herabgesetzt und die Konzentration des Feststoffes in der Suspension erhöht. Der aus Stufe (3) entnommene Salzbrei wird über Leitung (16) in den Hydrozyklon (41) geleitet. Die feststoff-freie Natronlauge geht über Leitung (47) zurück in Stufe (3). Im Hydrozyklon steigt der Feststoffgehalt der Suspension von 20 bis 30 % auf 45 bis 55 %. Die Flüssigphase besteht aus 40- bis 45-%iger Natronlauge.

Im Rührkessel (42) wird der über Leitung (46) aus dem Hydrozyklon (41) entnommene Salzbrei mit dem über Leitung (17) aus Stufe (4) entnommenen Salzbrei sowie mit der über Leitung (15) aus Stufe (2) kommenden 25- bis 28-%igen Natronlauge gemischt und über Leitung (48) in den Hydrozyklon (43) geleitet. Die dort abgeschiedene Natronlauge geht über Leitung (50) zurück in Stufe (3), der Salzbrei über Leitung (49) in den Rührkessel (44).

In der zweiten Stufe wird das Mehrfachsalz zersetzt und der Feststoff aus der Suspension abgetrennt. Im Rührkessel (44) wird der Salzbrei mit der über Leitung (13) aus Leitung (7) abgezweigten verdünnten Natronlauge gemischt und längere Zeit intensiv gerührt. Dabei zersetzen sich die Mehrfachsalze. Der Salzbrei wird über Leitung (51) in den Absetzbehälter (45) gegeben. Die feststoff-freie Lauge geht über Leitung (19) zurück in Stufe (2),

0114974
o.Z. 3865

der Salzbrei über Leitung (13) weiter zur Zentrifuge (6). Von dort geht die feststoff-freie Lauge über Leitung (20) zurück in Stufe (2), das NaOH-freie Salz wird über Leitung (21) dem Prozeß entnommen. Der Feststoff kann in der Zentrifuge durch Zugeben einer kleinen Wassermenge gewaschen werden.

Gegebenenfalls wird die Konzentration der Natronlauge im Zersetzer je nach Durchsatz durch Mischen der Laugeströme (13), (14) und (15) auf den geeigneten Wert eingestellt.

Tabelle 2 enthält die Ergebnisse der Zersetzung von Mehrfachsalzen in der Vorrichtung nach Figur 3. Es läßt sich also ein Zersetzungsgrad von 35 % und mehr erreichen.

O.Z. 3865

## Tabelle 1

Temperatur im Zersetzer: 80 °C

Mittlerer Korndurchmesser des Feststoffes: 0,25 mm

| Zersetzertyp | NaOH-Konzentration in der Flüssigphase | Verweilzeit des Feststoffes im Zersetzer | NaOH-Gehalt des Feststoffes | | Zersetzungs-grad |
|---|---|---|---|---|---|
| | | | vor der Zersetzung | nach | |
| | Gew.-% | min | Gew.-% | Gew.-% | % |
| Zersetzer mit Rohr-charakteri-stik | 30,5 | 60 | 4,4 | 1,0 | 77 |
| | 28,3 | 65 | 3,8 | 0,7 | 82 |
| | 25,0 | 90 | 5,6 | 0,2 | 96 |
| | 22,7 | 50 | 4,8 | 0,6 | 87 |
| Zersetzer aus einer zweistufi-gen Rühr-kessel-Kaskade | 29,8 | 120 | 4,9 | 0,9 | 82 |
| | 27,9 | 90 | 5,2 | 1,0 | 81 |
| | 25,3 | 60 | 4,3 | 1,1 | 74 |
| | 22,2 | 55 | 4,0 | 0,8 | 80 |
| Rührkessel-Zersetzer mit erhöh-ter Verweil-zeit des Feststoffes | 28,2 | 120 | 4,7 | 1,6 | 75 |
| | 25,1 | 65 | 3,9 | 1,2 | 69 |
| | 23,5 | 120 | 4,7 | 0,8 | 83 |
| | 21,8 | 120 | 3,3 | 0,5 | 84 |

0114974

Tabelle 2

Temperatur im Zersetzer: 80 $^{\circ}$C

Mittlerer Korndurchmesser des Feststoffes: 0,25 mm

| Zersetzertyp | NaOH-Konzentration in der Flüssigphase (Apparate 44 und 45) Gew.-% | Verweilzeit des Feststoffes im Zersetzer (Apparate 42, 44 und 45) min | NaOH-Gehalt des Feststoffes vor der Zersetzung Gew.-% | nach der Zersetzung Gew.-% | Zersetzungs-grad % |
|---|---|---|---|---|---|
| Rührkessel-Zersetzer mit Vorein-dickung | 22,9 | 80 | 5,4 | 0,5 | 91 |
|  | 25,8 | 85 | 3,9 | 0,5 | 87 |
|  | 27,5 | 100 | 4,2 | 0,6 | 86 |
|  | 29,1 | 100 | 4,8 | 0,8 | 83 |

0114974

0114974

O.Z. 3865

Patentansprüche:

1. Verfahren zum Zersetzen von Mehrfachsalzen, die während des stufenweisen Eindampfens von Natronlauge aus der NaCl-Elektrolyse und während des Abkühlens der konzentrierten Natronlauge entstehen und im wesentlichen das Doppelsalz aus NaOH und $Na_2SO_4$ sowie das Dreifachsalz aus NaOH, NaCl und $Na_2SO_4$ enthalten, sowie zur Bildung des annähernd NaOH-freien Doppelsalzes aus NaCl und $Na_2SO_4$ (als festes Salz) und dessen Entfernung aus einer wäßrigen Natronlauge, gekennzeichnet durch

   - Entnehmen der Mehrfachsalze als Salzbrei aus der letzten Eindampf- oder Kühlstufe,

   - Eindicken des Salzbreies und Abtrennen eines Teils oder der gesamten Lauge mit großem NaOH-Gehalt und anschließendes Zugeben von Lauge mit geringerem NaOH-Gehalt,

   - Einbringen des Salzbreies in einen Zersetzer, der außerhalb des Lauge-Hauptstromes liegt,

   - Zugeben von verdünnter an geeigneter Stelle aus dem Lauge-Hauptstrom abgezweigter Natronlauge in den Zersetzer,

   - intensives Mischen der Suspension im Zersetzer,

   - Abtrennen des annähernd NaOH-freien festen Doppelsalzes aus NaCl und $Na_2SO_4$ sowie des gegebenenfalls vorhandenen Überschusses an festem NaCl oder $Na_2SO_4$ aus der Suspension,

   - Rückführen der an verschiedenen Stellen abgetrennten Natronlauge, die noch gelöste Salze enthält, in den Lauge-Hauptstrom.

2. Verfahren nach Anspruch 1, gekennzeichnet durch
   - eine Temperatur im Zersetzer zwischen 50 und 100 $^{o}$C.

3. Verfahren nach den Ansprüchen 1 und 2, gekennzeichnet durch

   - eine Laugekonzentration im Zersetzer von weniger als 30 % NaOH in der Flüssigphase.

4. Verfahren nach den Ansprüchen 1 bis 3, gekennzeichnet durch

   - Mischen der Suspension in einem Zersetzer mit Rohrcharakteristik während mindestens 30 Minuten.

5. Verfahren nach den Ansprüchen 1 bis 3, gekennzeichnet durch

   - Mischen der Suspension in einem Rührkessel während mindestens 60 Minuten.

6. Verfahren nach den Ansprüchen 1 bis 5, gekennzeichnet durch

   - mehrstufiges Eindicken des Salzbreies mittels Hydrozyklon, Zentrifuge oder Eindicker mit Salzsack.

7. Verfahren nach den Ansprüchen 1 bis 6, gekennzeichnet durch

   - Abtrennen des Festsalzes aus der den Zersetzer verlassenden Suspension mittels eines Absetzbehälters und/oder einer Zentrifuge.

Fig.1

0114974

Fig. 2a

Fig. 2b

Fig. 2c

0114974

O.Z. 3065

Fig. 3

0114974

O.Z. 3865